# EUROPÄISCHE PATENTSCHRIFT

(11) **EP 4 519 142 B1**
(45) Veröffentlichungstag und Bekanntmachung des Hinweises auf die Patenterteilung: **18.03.2026**
(21) Anmeldenummer: 23725122.8
(22) Anmeldetag: 03.05.2023
(51) Int. Cl.: B61D 25/00, B60J 1/00

(54) **FIXIERUNGSVORRICHTUNG UND VERFAHREN ZUM FIXIEREN EINER FENSTERSCHEIBE EINES FENSTERS FÜR EIN SCHIENENFAHRZEUG UND FENSTER FÜR EIN SCHIENENFAHRZEUG**
FIXING DEVICE AND METHOD FOR FIXING A WINDOW PANE OF A WINDOW FOR A RAIL VEHICLE, AND WINDOW FOR A RAIL VEHICLE
DISPOSITIF ET PROCÉDÉ DE FIXATION POUR FIXER UNE VITRE D'UNE FENÊTRE POUR UN VÉHICULE FERROVIAIRE, ET FENÊTRE POUR UN VÉHICULE FERROVIAIRE

(30) Priorität: 04.05.2022 DE 102022111000
(43) Veröffentlichungstag der Anmeldung: 12.03.2025
(73) Patentinhaber: Knorr-Bremse Gesellschaft mit beschränkter Haftung, 2340 Mödling (AT)
(72) Erfinder: HÖRLENDSBERGER, Christian, 3340 Waidhofen an der Ybbs (AT); UTTENDORFSKY, Petr, 2340 Mödling (AT); VIK, Michal, 2340 Mödling (AT); MALEC, Milos, 2340 Mödling (AT); SACHA, David, 2340 Mödling (AT); HASAK, Milan, 2340 Mödling (AT)
(74) Vertreter: Aurigium Leischner & Luthe
(86) Internationale Anmeldenummer: PCT/EP2023/061607
(87) Internationale Veröffentlichungsnummer: WO 2023/213842

(56) Entgegenhaltungen:
- EP-A1- 0 895 890
- EP-A1- 3 604 009
- DE-A1- 102013 204 992
- DE-A1- 3 040 592
- US-A1- 2014 290 529

## Beschreibung

Die vorliegende Erfindung bezieht sich auf eine Fixierungsvorrichtung zum Fixieren einer Fensterscheibe eines Fensters in einem Türflügel für ein Schienenfahrzeug, auf ein Fenster für ein Schienenfahrzeug und auf ein Verfahren zum Fixieren einer Fensterscheibe eines Fensters in einem Türflügel für ein Schienenfahrzeug mittels einer solchen Fixierungsvorrichtung.

Für eine Fixierung von Fensterscheiben in Türflügeln für Schienenfahrzeuge können beispielsweise spezielle Anforderungen gegeben sein. Herkömmlicherweise kann eine Fensterscheibe insbesondere durch Klebstoff oder lediglich durch ein Gummiprofil in einem Fenster eines Schienenfahrzeugs fixiert sein oder werden. Denkbar wäre beispielsweise auch der Einsatz eines anderen Klebstoffs, zum Beispiel mit kürzerer Aushärtezeit.

Die DE 10 2013 204 992 A1 betrifft eine Fixierungsvorrichtung zum Fixieren einer Fensterscheibe eines Fensters in einem Türflügel für ein Fahrzeug, wobei die Fixierungsvorrichtung ein Profilelement, ein Fensterprofilelement und eine Befestigungseinrichtung aufweist, wobei die Befestigungseinrichtung ausgebildet ist, um durch Formschluss und/oder Kraftschluss das Profilelement und das Fensterprofilelement aneinander zu befestigen, wobei das Profilelement aus einem elastischen Material ausgeformt ist, wobei das Profilelement einen Vertiefungsabschnitt zum Umgreifen eines Randbereichs der Fensterscheibe, einen Anbringungsabschnitt zum Anbringen von einem Teil der Befestigungseinrichtung an dem Profileelement durch Formschluss und einen Deckelabschnitt zum Abdecken der Befestigungseinrichtung aufweist.

Vor diesem Hintergrund ist es die Aufgabe der vorliegenden Erfindung, eine verbesserte Fixierungsvorrichtung zum Fixieren einer Fensterscheibe eines Fensters in einem Türflügel für ein Schienenfahrzeug, ein verbessertes Fenster für ein Schienenfahrzeug und ein verbessertes Verfahren zum Fixieren einer Fensterscheibe eines Fensters in einem Türflügel für ein Schienenfahrzeug mittels einer solchen Fixierungsvorrichtung zu schaffen.

Diese Aufgabe wird durch eine Fixierungsvorrichtung zum Fixieren einer Fensterscheibe eines Fensters in einem Türflügel für ein Schienenfahrzeug, durch ein Fenster für ein Schienenfahrzeug und durch ein Verfahren zum Fixieren einer Fensterscheibe eines Fensters in einem Türflügel für ein Schienenfahrzeug mittels einer solchen Fixierungsvorrichtung gemäß den Hauptansprüchen gelöst.

Gemäß Ausführungsformen kann insbesondere eine Fixierung einer Fensterscheibe in einem Türflügel für ein Schienenfahrzeug in einem Profilelement, beispielsweise einem Gummiprofil, durch eine Befestigungseinrichtung, beispielsweise durch mindestens eine Schraube, realisiert werden. Anders ausgedrückt kann eine Fensterscheibenmontage oder -Fixierung insbesondere durch Anwendung gängiger Prozesse zum Ersetzen spezieller Prozesse, wie beispielsweise Kleben, oder zum Ersetzen nachteiliger Verfahren umgesetzt sein oder werden. Eine solche Montage oder Fixierung von Fensterscheiben in Türflügeln für Schienenfahrzeuge kann insbesondere auch eine Implementierung in der Serienfertigung ermöglichen. Zum Fixieren einer Fensterscheibe eines Fensters in einem Türflügel für ein Schienenfahrzeug kann somit gemäß Ausführungsformen beispielsweise auf Klebstoff oder andere Klebemittel, somit auf stoffschlüssige Verbindungen, verzichtet werden. Hierbei kann die Befestigungseinrichtung, wie zum Beispiel mindestens eine Fixierungsschraube, durch ein Profilelement, insbesondere ein Fixiergummiprofil, der Fixierungsvorrichtung selbst bedeckt sein oder werden und somit für Passagiere des Schienenfahrzeugs unsichtbar sein.

Vorteilhafterweise können gemäß Ausführungsformen insbesondere eine Montagezeit verkürzt, ein Vandalismusschutz verbessert und eine schnelle Austauschbarkeit der Fensterscheibe direkt im Schienenfahrzeug ermöglicht werden. Verglichen mit einer Fixierung durch Stoffschluss kann eine solche klebstoffreie Fixierung der Fensterscheibe oder Fixierung ohne Stoffschluss gemäß Ausführungsformen beispielsweise auch einen vorteilhaften Wegfall einer Zertifizierung des Klebeprozesses für den Schienenverkehr und einer Aushärtezeit für Klebstoff bewirken, sodass eine schnelle und einfache Austauschbarkeit der Fensterscheibe direkt im Schienenfahrzeug ermöglicht werden kann. Verglichen mit einer Fixierung lediglich durch ein Gummiprofil kann durch eine kombinierte Fixierung gemäß Ausführungsformen nach der Fixierung insbesondere eine ebene bzw. fluchtrechte Oberfläche erhalten werden, wobei vermieden werden kann, dass ein Gummiprofil aus der Montageoberfläche vorsteht, und eine Austauschbarkeit der Fensterscheibe direkt im Schienenfahrzeug erreicht werden kann.

Es wird eine Fixierungsvorrichtung zum Fixieren einer Fensterscheibe eines Fensters in einem Türflügel für ein Schienenfahrzeug vorgestellt, wobei die Fixierungsvorrichtung ein Profilelement, ein Fensterprofilelement und eine Befestigungseinrichtung aufweist, wobei die Befestigungseinrichtung ausgebildet ist, um durch Formschluss und zusätzlich oder alternativ durch Kraftschluss das Profilelement und das Fensterprofilelement aneinander zu befestigen, wobei das Profilelement aus einem elastischen Material ausgeformt ist, wobei das Profilelement einen Vertiefungsabschnitt zum Umgreifen eines Randbereichs der Fensterscheibe, einen Anbringungsabschnitt zum Anbringen von einem Teil der Befestigungseinrichtung an dem Profileelement durch Formschluss, einen Deckelabschnitt zum Abdecken der Befestigungseinrichtung und einen Verbindungsabschnitt zum Verbinden des Deckelabschnitts mit dem Fensterprofilelement durch Formschluss aufweist, wobei der Deckelabschnitt zwischen dem Anbringungsabschnitt und dem Verbindungsabschnitt angeordnet ist, wobei das Fensterprofilelement einen Anordnungsabschnitt zum Anordnen eines weiteren Teils der Befestigungseinrichtung und einen Aufnahmeabschnitt zum Aufnehmen des Verbindungsabschnitts des Profilelements aufweist.

Das Profilelement kann auch als ein Fixierprofil oder Fixiergummiprofil bezeichnet werden. Das Fensterprofilelement kann auch als ein Fensterprofil bezeichnet werden. Das Umgreifen kann eine Verbindung durch Formschluss repräsentieren. Das Anordnen kann eine Verbindung durch Formschluss repräsentieren. Der Deckelabschnitt und der Verbindungsabschnitt des Profilelements können relativ zu dem Vertiefungsabschnitt und dem Anbringungsabschnitt des Profilelements biegbar sein, um die Befestigungseinrichtung zugänglich zu machen. Der Vertiefungsabschnitt, der Anbringungsabschnitt und der Deckelabschnitt des Profilelements können sich entlang und zusätzlich oder alternativ parallel zu einer Haupterstreckungsebene der Fensterscheibe erstrecken. Anders ausgedrückt können der Vertiefungsabschnitt, der Anbringungsabschnitt und der Deckelabschnitt des Profilelements sich parallel zu einer gemeinsamen Bauteilebene erstrecken. Der Verbindungsabschnitt kann sich quer zu der Haupterstreckungsebene der Fensterscheibe und zusätzlich oder alternativ zu der gemeinsamen Bauteilebene erstrecken. Das Fensterprofilelement kann mit einer das Fenster umgebenden Wand eines Türflügels für das Schienenfahrzeug verbindbar oder verbunden sein.

Gemäß einer Ausführungsform kann das Profilelement einstückig und zusätzlich oder alternativ aus Gummi ausgeformt sein. Eine solche Ausführungsform bietet den Vorteil, dass ein robustes und zuverlässiges Profilelement kostengünstig beispielsweise durch Extrusion hergestellt werden kann.

Auch kann die Befestigungseinrichtung mindestens eine Fixierungsplatte, mindestens eine Gewindeeinrichtung und mindestens eine Fixierungsschraube aufweisen. Hierbei kann die mindestens eine Gewindeeinrichtung an dem Anordnungsabschnitt des Fensterprofilelements anordenbar sein. Dabei kann die mindestens eine Fixierungsplatte in dem Anbringungsabschnitt des Profilelements anbringbar sein und mittels der mindestens einen Gewindeeinrichtung und der mindestens einen Fixierungsschraube an dem Fensterprofilelement befestigbar sein. Die mindestens eine Fixierungsplatte kann den einen Teil der Befestigungseinrichtung repräsentieren. Die mindestens eine Gewindeeinrichtung und optional zusätzlich die mindestens eine Fixierungsschraube kann den weiteren Teil der Befestigungseinrichtung repräsentieren. Für jede Fixierungsplatte kann mindestens eine Gewindeeinrichtung und mindestens eine Fixierungsschraube vorgesehen sein. Die Gewindeeinrichtung kann eine Nietmutter, ein Gewinde, einen Gewindeeinsatz oder dergleichen sein. Eine solche Ausführungsform bietet den Vorteil, dass die Befestigung des Profilelements und des Fensterprofilelements aneinander auf robuste, zuverlässige und einfach lösbare Weise durch Formschluss und zusätzlich oder alternativ Kraftschluss ermöglicht werden kann.

Ferner kann in einem aneinander befestigten Zustand des Profilelements und des Fensterprofilelements der Deckelabschnitt des Profilelements fluchtend mit einem Blendenabschnitt des Fensterprofilelements angeordnet sein. Der Blendenabschnitt kann hierbei benachbart zu dem Aufnahmeabschnitt angeordnet sein. Der Aufnahmeabschnitt kann zwischen dem Blendenabschnitt und dem Anordnungsabschnitt angeordnet sein. Vorteilhafterweise kann in einem aneinander befestigten Zustand des Profilelements und des Fensterprofilelements somit der Deckelabschnitt mit einem Blendenabschnitt des Fensterprofilelements eine Ebene oder fluchtrechte Oberfläche bilden wenn der Verbindungsabschnitt in dem Aufnahmeabschnitt aufgenommen ist.

Zudem kann das Fensterprofilelement einen äußeren Anlageabschnitt zur Anlage gegen ein äußeres Blech einer das Fenster umgebenden Wand des Türflügels für das Schienenfahrzeug und einen inneren Anlageabschnitt zur Anlage gegen ein inneres Blech der das Fenster umgebenden Wand des Türflügels für das Schienenfahrzeug aufweisen. Die Anlageabschnitte können an voneinander abgewandten Seiten des Fensterprofilelements angeordnet sein. Das äußere Blech kann hierbei einer Umgebung des Schienenfahrzeugs zugewandt sein. Das innere Blech kann einem Innenraum oder Passagierbereich des Schienenfahrzeugs zugewandt sein. Eine solche Ausführungsform bietet den Vorteil, dass das Fensterprofilelement, und somit die Fixierungsvorrichtung, einfach und genau mit der das Fenster umgebenden Wand des Türflügels für das Schienenfahrzeug verbindbar ist.

Dabei kann jeder der Anlageabschnitte als eine stufenförmige Ausnehmung mit einer Anlagefläche und einem Stoßkantenabschnitt ausgeformt sein. Hierbei kann eine Stufenhöhe des Stoßkantenabschnittes einer Dicke des jeweiligen Blechs der das Fenster umgebenden Wand des Türflügels für das Schienenfahrzeug entsprechen. Eine solche Ausführungsform bietet den Vorteil, dass das äußere Blech und das Fensterprofilelement eine ebene Fläche zu einer Außenseite des Schienenfahrzeugs hin bilden können und das innere Blech, das Fensterprofilelement, genauer gesagt der Blendenabschnitt und das Profilelement eine ebene Fläche zu einer Innenseite des Schienenfahrzeugs hin bilden können.

Gemäß einer Ausführungsform kann das Fensterprofilelement benachbart zu dem Aufnahmeabschnitt eine Mulde zum formschlüssigen Halten des Verbindungsabschnitts des Profilelements aufweisen. Die Mulde kann zwischen dem Aufnahmeabschnitt und einem Blendenabschnitt des Fensterprofilelement angeordnet sein. Eine solche Ausführungsform bietet den Vorteil, dass der Verbindungsabschnitt einfach und zuverlässig gehalten werden kann.

Auch kann das Profilelement in dem Vertiefungsabschnitt eine Mehrzahl von Lamellen zur Anlage an den Randbereich der Fensterscheibe aufweisen. Eine solche Ausführungsform bietet den Vorteil, dass der Randbereich der Fensterscheibe zuverlässig gehalten werden kann.

Es wird ferner ein Fenster für ein Schienenfahrzeug vorgestellt, wobei das Fenster eine Fensterscheibe und mindestens ein Exemplar einer Ausführungsform einer hierin genannten Fixierungsvorrichtung aufweisen kann.

Unter Verwendung einer Ausführungsform einer hierin genannten Fixierungsvorrichtung kann somit die Fensterscheibe vorteilhaft in einem Türflügel fixiert werden.

Es wird zudem ein Verfahren zum Fixieren einer Fensterscheibe eines Fensters in einem Türflügel für ein Schienenfahrzeug mittels einer Ausführungsform einer hierin genannten Fixierungsvorrichtung vorgestellt, wobei das Verfahren folgende Schritte aufweist:
Anordnen des Randbereichs der Fensterscheibe in dem Vertiefungsabschnitt des Profilelements, wobei der Randbereich durch den Vertiefungsabschnitt umgriffen wird;
Anbringen des einen Teils der Befestigungseinrichtung in dem Anbringungsabschnitt des Profilelements durch Formschluss;
Anordnen des weiteren Teils der Befestigungseinrichtung in dem Anordnungsabschnitt des Fensterprofilelements;
Befestigen des Profilelements und des Fensterprofilelements aneinander durch Formschluss und/oder Kraftschluss mittels der Befestigungseinrichtung; und
Verbinden des Deckelabschnitts des Profilelements mit dem Fensterprofilelement durch Formschluss, wobei der Verbindungsabschnitt des Profilelements in dem Aufnahmeabschnitt des Fensterprofilelements aufgenommen wird.

Durch Ausführen des Verfahrens kann unter Verwendung einer Ausführungsform einer hierin genannten Fixierungsvorrichtung eine Fensterscheibe eines Fensters in einem Türflügel für ein Schienenfahrzeug vorteilhaft fixiert werden. Hierbei können der Schritt des Anordnens, der Schritt des Anbringens und der Schritt des Anordnens in beliebiger Reihenfolge relativ zueinander ausgeführt werden. Der Schritt des Anordnens, der Schritt des Anbringens und der Schritt des Anordnens können vor dem Schritt des Befestigens und dem Schritt des Verbindens ausgeführt werden. Der Schritt des Befestigens kann vor dem Schritt des Verbindens ausgeführt werden. Der Schritt des Verbindens kann nach dem Schritt des Befestigens ausgeführt werden.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung eines Schienenfahrzeugs mit einem Ausführungsbeispiel eines Fensters;
Fig. 2 eine schematische Teildarstellung eines Ausführungsbeispiels eines Fensters für ein Schienenfahrzeug; und
Fig. 3 ein Ablaufdiagramm eines Ausführungsbeispiels eines Verfahrens zum Fixieren einer Fensterscheibe eines Fensters für ein Schienenfahrzeug.

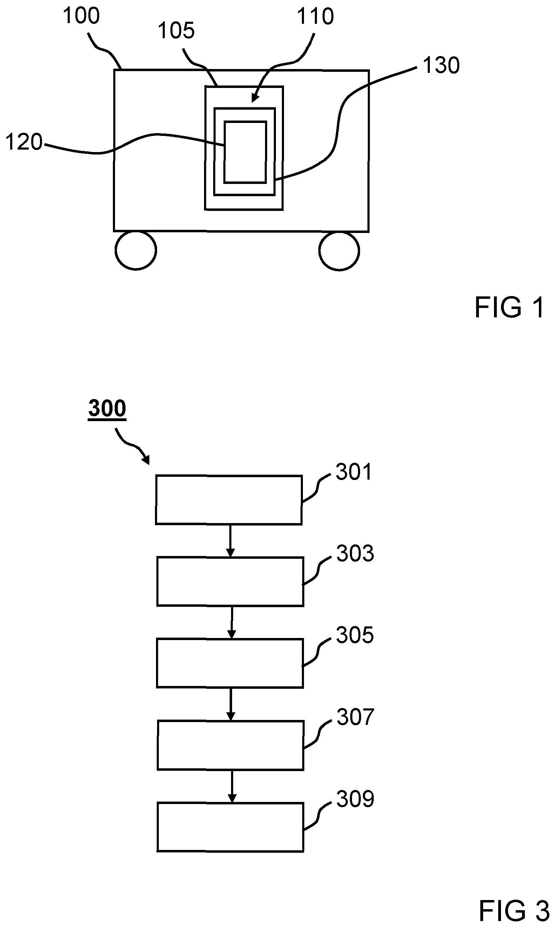

**Fig. 1** zeigt eine schematische Darstellung eines Schienenfahrzeugs 100 mit einem Ausführungsbeispiel eines Fensters 110 in einem Türflügel 105. Das Schienenfahrzeug 100 kann zumindest ein solches Fenster 110 aufweisen. Das Fenster 110 umfasst eine Fensterscheibe 120 und eine Fixierungsvorrichtung 130. Die Fixierungsvorrichtung 130 ist ausgebildet, um die Fensterscheibe 120 des Fensters 110 in dem Türflügel 105 zu fixieren. Auf die Fixierungsvorrichtung 130 wird nachfolgend unter Bezugnahme auf die folgenden Figuren noch detaillierter eingegangen.

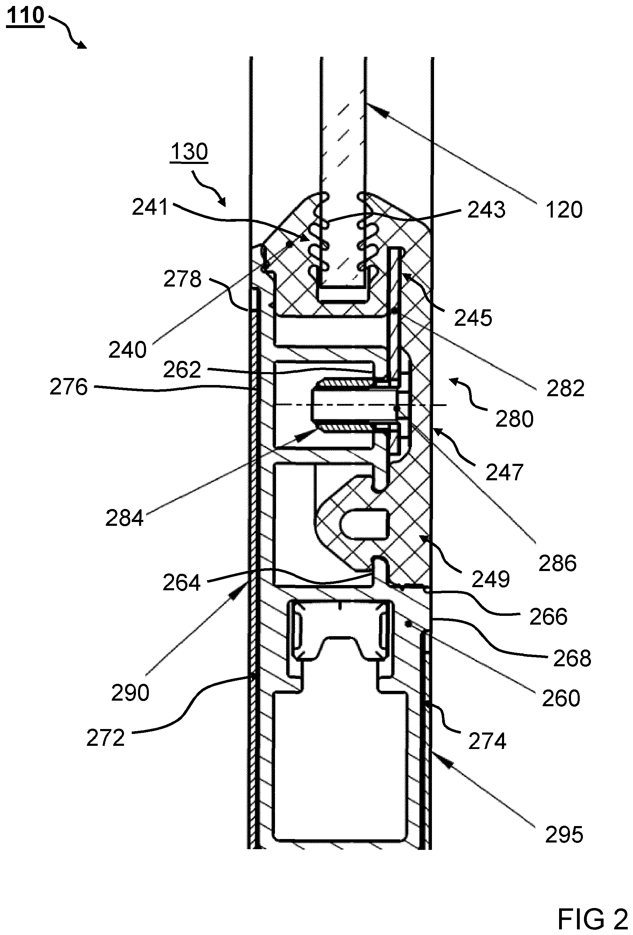

**Fig. 2** zeigt eine schematische Teildarstellung eines Ausführungsbeispiels eines Fensters 110 für ein Schienenfahrzeug. Das Fenster 110 entspricht beispielsweise dem Fenster aus Fig. 1. Das Fenster 110 umfasst eine Fensterscheibe 120, von der lediglich ein Teilabschnitt gezeigt ist, und eine Fixierungsvorrichtung 130.

Die Fixierungsvorrichtung 130 ist entlang zumindest einer Seite bzw. Kante der Fensterscheibe 120 angeordnet, bis hin zu beispielsweise allen Seiten bzw. Kanten der Fensterscheibe 120. Die Fixierungsvorrichtung 130 ist ausgebildet, um die Fensterscheibe 120 des Fensters 110 zu fixieren. Die Fixierungsvorrichtung 130 umfasst ein Profilelement 240, ein Fensterprofilelement 260 und eine Befestigungseinrichtung 280.

Das Profilelement 240 ist aus einem elastischen Material ausgeformt. Das Profilelement 240 umfasst einen Vertiefungsabschnitt 241, einen Anbringungsabschnitt 245, eine Deckelabschnitt 247 und einen Verbindungsabschnitt 249. Der Vertiefungsabschnitt 241 ist ausgeformt, um einen Randbereich der Fensterscheibe 120 zu umgreifen. Der Randbereich umfasst eine Kante und einen angrenzenden Rand zweier gegenüberliegende Fensterflächen der Fensterscheibe. Der Anbringungsabschnitt 245 ist ausgeformt, um einen Teil der Befestigungseinrichtung 280 durch Formschluss an dem Profilelement 240 anzubringen. Der Deckelabschnitt 247 ist ausgeformt, um die Befestigungseinrichtung 280 abzudecken bzw. zu bedecken. Der Verbindungsabschnitt 249 ist ausgeformt, um den Deckelabschnitt 247 durch Formschluss mit dem Fensterprofilelement 260 zu verbinden. Dabei ist der Deckelabschnitt 247 zwischen dem Anbringungsabschnitt 245 und dem Verbindungsabschnitt 249 angeordnet. Der Anbringungsabschnitt 245 ist zwischen dem Vertiefungsabschnitt 241 und dem Deckelabschnitt 247 angeordnet.

Gemäß dem hier dargestellten Ausführungsbeispiel ist das Profilelement 240 einstückig ausgeformt. Ferner ist das Profilelement 240 aus Gummi oder vergleichbaren elastischen Material ausgeformt. Zudem umfasst das Profilelement 240 gemäß dem hier dargestellten Ausführungsbeispiel eine Mehrzahl von Lamellen 243. Die Lamellen 243 sind in dem Vertiefungsabschnitt 241 angeordnet und ausgeformt, um an dem Randbereich der Fensterscheibe 120 anzuliegen.

Das Fensterprofilelement 260 umfasst einen Anordnungsabschnitt 262 und einen Aufnahmeabschnitt 264. Der Anordnungsabschnitt 262 ist ausgeformt, um einen weiteren Teil der Befestigungseinrichtung 280 anzuordnen, genauer gesagt durch Formschluss anzuordnen. Der Aufnahmeabschnitt 264 ist ausgeformt, um den Verbindungsabschnitt 249 des Profilelements 240 aufzunehmen, genauer gesagt durch Formschluss aufzunehmen.

Gemäß dem hier dargestellten Ausführungsbeispiel umfasst das Fensterprofilelement 260 ferner eine Mulde 266, die benachbart zu dem Aufnahmeabschnitt 264 angeordnet ist. Die Mulde 266 ist ausgeformt, um den Verbindungsabschnitt 249 des Profilelements 240 formschlüssig zu halten. Zudem umfasst das Fensterprofilelement 260 gemäß dem hier dargestellten Ausführungsbeispiel einen äußeren Anlageabschnitt 272 zur Anlage gegen ein äußeres Blech 290 einer das Fenster umgebenden Wand des Schienenfahrzeugs, insbesondere des Türflügels, und einen inneren Anlageabschnitt 274 zur Anlage gegen ein inneres Blech 295 der das Fenster umgebenden Wand des Schienenfahrzeugs, insbesondere des Türflügels. Die Anlageabschnitte 272, 274 sind an voneinander abgewandten Seiten des Fensterprofilelements 260 angeordnet. Dabei ist jeder der Anlageabschnitte 272, 274 als eine stufenförmige Ausnehmung mit einer Anlagefläche 276 und einem Stoßkantenabschnitt 278 ausgeformt. Eine Stufenhöhe des Stoßkantenabschnittes 278 entspricht einer Dicke des jeweiligen Blechs 290 bzw. 292 der das Fenster umgebenden Wand des Schienenfahrzeugs, insbesondere des Türflügels. Ferner umfasst das Fensterprofilelement 260 gemäß dem hier dargestellten Ausführungsbeispiel einen Blendenabschnitt 268. Der Blendenabschnitt 268 ist zwischen dem Aufnahmeabschnitt 264 und dem inneren Anlageabschnitt 274 angeordnet. Genauer gesagt ist der Blendenabschnitt 268 zwischen der Mulde 266 und dem inneren Anlageabschnitt 274 angeordnet. In einem aneinander befestigten Zustand des Profilelements 240 und des Fensterprofilelements 260, wobei der Verbindungsabschnitt 249 des Profilelements 240 in dem Aufnahmeabschnitt 264 des Fensterprofilelements 260 aufgenommen ist, ist der Deckelabschnitt 247 des Profilelements 240 fluchtend mit dem Blendenabschnitt 268 des Fensterprofilelements 260 angeordnet.

Die Befestigungseinrichtung 280 ist ausgebildet, um das Profilelement 240 und das Fensterprofilelement 260 aneinander durch Formschluss und/oder Kraftschluss zu befestigen.

Gemäß dem hier dargestellten Ausführungsbeispiel umfasst die Befestigungseinrichtung 280 mindestens eine Fixierungsplatte 282, mindestens eine Gewindeeinrichtung 284 und mindestens eine Fixierungsschraube 286. Die mindestens eine Fixierungsplatte 282 ist in dem Anbringungsabschnitt 245 des Profilelements 240 angebracht, genauer gesagt einseitig eingespannt. Die mindestens eine Gewindeeinrichtung 284, hier eine Nietmutter, ist an dem Anordnungsabschnitt 262 des Fensterprofilelements 260 angeordnet, genauer gesagt in Anlage gegen denselben angeordnet. Die mindestens eine Fixierungsplatte 282 ist ferner mittels der mindestens einen Gewindeeinrichtung 284 und der mindestens einen Fixierungsschraube 286 an dem Fensterprofilelement 260 befestigt. Dabei greift die mindestens eine Fixierungsschraube 286 durch eine Durchgangsöffnung in der mindestens einen Fixierungsplatte 282 hindurch in die mindestens eine hier als Nietmutter ausgeführte Gewindeeinrichtung 284 ein. Hierbei ist der Anordnungsabschnitt 262 des Fensterprofilelements 260 zwischen der mindestens einen Gewindeeinrichtung 284 einerseits und der mindestens einen Fixierungsplatte 282 sowie einem Kopf der mindestens einen Fixierungsschraube 286 andererseits geklemmt.

Aus der Darstellung von Fig. 2 ist ferner erkennbar, dass der Vertiefungsabschnitt 241 als eine Nut, ein Schlitz oder dergleichen ausgeformt ist. Die Fensterscheibe 120 ist mit ihrem Randbereich in dem Vertiefungsabschnitt 241 angeordnet. Der Vertiefungsabschnitt 241 ist ferner zwischen dem Anbringungsabschnitt 245 und einem Auflageabschnitt angeordnet, mit dem das Profilelement 240 an dem Fensterprofilelement 260 aufliegt. Der Anbringungsabschnitt 245 ist als ein Schlitz ausgeformt. Ein Teilabschnitt der Fixierungsplatte 282 ist in dem Anbringungsabschnitt 245 angebracht. Der Deckelabschnitt 247 überspannt die Befestigungseinrichtung 280, insbesondere die Gewindeeinrichtung 284 und die Fixierungsschraube 286, zwischen dem Anbringungsabschnitt 245 und dem Verbindungsabschnitt 249. Der Verbindungsabschnitt 249 ist pfeilförmig, hakenförmig oder rastnasenförmig ausgeformt. Der Aufnahmeabschnitt 264 ist ausgeformt, um den Verbindungsabschnitt 249 an dessen schmalster Stelle zu halten. Die Anlagefläche 276 des äußeren Anlageabschnittes 272 ist größer als die Anlagefläche des inneren Anlageabschnittes 274, um unterschiedliche Abmessungen der Bleche 290 und 295 zu berücksichtigen. Das äußere Blech 290 erstreckt sich bis auf Höhe des Vertiefungsabschnitts 241, wobei sich das Innere Blech 295 lediglich bis auf Höhe des Blendenabschnitts 268 erstreckt.

**Fig. 3** zeigt ein Ablaufdiagramm eines Ausführungsbeispiels eines Verfahrens 300 zum Fixieren einer Fensterscheibe eines Fensters in einem Türflügel für ein Schienenfahrzeug. Dabei ist das Verfahren 300 zum Fixieren mittels oder unter Verwendung einer Fixierungsvorrichtung ausführbar, die der Fixierungsvorrichtung aus einer der vorstehend beschriebenen Figuren entspricht oder ähnelt. Das Verfahren 300 zum Fixieren umfasst einen Schritt 301 des Anordnens, einen Schritt 303 des Anbringens, einen Schritt 305 des Anordnens, einen Schritt 307 des Befestigens und einen Schritt 309 des Verbindens.

In dem Schritt 301 des Anordnens wird der Randbereich der Fensterscheibe in dem Vertiefungsabschnitt des Profilelements angeordnet. Dabei wird der Randbereich durch den Vertiefungsabschnitt umgriffen. In dem Schritt 303 des Einbringens wird der eine Teil der Befestigungseinrichtung in dem Anbringungsabschnitt des Profilelements durch Formschluss angebracht. In dem Schritt 305 des Anordnens wird der weitere Teil der Befestigungseinrichtung in dem Anordnungsabschnitt des Fensterprofilelements angeordnet.

Insbesondere können der Schritt 301 des Anordnens, der Schritt 303 des Anbringens und der Schritt 305 des Anordnens in beliebiger bzw. geeigneter Reihenfolge ausgeführt werden.

Nachfolgend werden in dem Schritt 307 des Befestigens das Profilelement und das Fensterprofilelement durch Formschluss und/oder Kraftschluss mittels der Befestigungseinrichtung aneinander befestigt. Wiederum nachfolgend wird in dem Schritt 309 des Verbindens der Deckelabschnitt des Profilelements mit dem Fensterprofilelement durch Formschluss verbunden. Dabei wird der Verbindungsabschnitt des Profilelements in dem Aufnahmeabschnitt des Fensterprofilelements aufgenommen.

Gemäß einem Ausführungsbeispiel kann im Schritt 307 des Befestigens eine Befestigungseinrichtung verwendet werden, die mindestens eine Fixierungsplatte, mindestens eine Gewindeeinrichtung und mindestens eine Fixierungsschraube aufweist. Hierbei wird die mindestens eine Gewindeeinrichtung an dem Anordnungsabschnitt des Fensterprofilelements angeordnet, wird die mindestens eine Fixierungsplatte in dem Anbringungsabschnitt des Profilelements angebracht und mittels der mindestens einen Gewindeeinrichtung und der mindestens einen Fixierungsschraube an dem Fensterprofilelement befestigt.

### BEZUGSZEICHENLISTE

- 100: Schienenfahrzeug
- 105: Türflügel
- 110: Fenster
- 120: Fensterscheibe
- 130: Fixierungsvorrichtung

- 240: Profilelement
- 241: Vertiefungsabschnitt
- 243: Lamelle
- 245: Anbringungsabschnitt
- 247: Deckelabschnitt
- 249: Verbindungsabschnitt
- 260: Fensterprofilelement
- 262: Anordnungsabschnitt
- 264: Aufnahmeabschnitt
- 266: Mulde
- 268: Blendenabschnitt
- 272: äußerer Anlageabschnitt
- 274: innerer Anlageabschnitt
- 276: Anlagefläche
- 278: Stoßkantenabschnitt
- 280: Befestigungseinrichtung
- 282: Fixierungsplatte
- 284: Gewindeeinrichtung
- 286: Fixierungsschraube
- 290: äußeres Blech
- 295: inneres Blech

- 300: Verfahren zum Fixieren
- 301: Schritt des Anordnens
- 303: Schritt des Anbringens
- 305: Schritt des Anordnens
- 307: Schritt des Befestigens
- 309: Schritt des Verbindens

## Patentansprüche

1. Fixierungsvorrichtung (130) zum Fixieren einer Fensterscheibe (120) eines Fensters (110) in einem Türflügel (105) für ein Schienenfahrzeug (100), wobei die Fixierungsvorrichtung (130) ein Profilelement (240), ein Fensterprofilelement (260) und eine Befestigungseinrichtung (280) aufweist, wobei die Befestigungseinrichtung (280) ausgebildet ist, um durch Formschluss und/oder Kraftschluss das Profilelement (240) und das Fensterprofilelement (260) aneinander zu befestigen, wobei das Profilelement (240) aus einem elastischen Material ausgeformt ist, wobei das Profilelement (240) einen Vertiefungsabschnitt (241) zum Umgreifen eines Randbereichs der Fensterscheibe (120), einen Anbringungsabschnitt (245) zum Anbringen von einem Teil (282) der Befestigungseinrichtung (280) an dem Profileelement (240) durch Formschluss, und einen Deckelabschnitt (247) zum Abdecken der Befestigungseinrichtung (280) aufweist, **dadurch gekennzeichnet, dass** das Profilelement (240) ferner einen Verbindungsabschnitt (249) zum Verbinden des Deckelabschnitts (247) mit dem Fensterprofilelement (260) durch Formschluss aufweist, wobei der Deckelabschnitt (247) zwischen dem Anbringungsabschnitt (245) und dem Verbindungsabschnitt (249) angeordnet ist, wobei das Fensterprofilelement (260) einen Anordnungsabschnitt (262) zum Anordnen eines weiteren Teils (284, 286) der Befestigungseinrichtung (280) und einen Aufnahmeabschnitt (264) zum Aufnehmen des Verbindungsabschnitts (249) des Profilelements (240) aufweist.

2. Fixierungsvorrichtung (130) gemäß Anspruch 1, wobei das Profilelement (240) einstückig und/oder aus Gummi ausgeformt ist.

3. Fixierungsvorrichtung (130) gemäß einem der vorangegangenen Ansprüche, wobei die Befestigungseinrichtung (280) mindestens eine Fixierungsplatte (282), mindestens eine Gewindeeinrichtung (284) und mindestens eine Fixierungsschraube (286) aufweist, wobei die mindestens eine Gewindeeinrichtung (284) an dem Anordnungsabschnitt (262) des Fensterprofilelements (260) anordenbar ist, wobei die mindestens eine Fixierungsplatte (282) in dem Anbringungsabschnitt (245) des Profilelements (240) anbringbar ist und mittels der mindestens einen Gewindeeinrichtung (284) und der mindestens einen Fixierungsschraube (286) an dem Fensterprofilelement (260) befestigbar ist.

4. Fixierungsvorrichtung (130) gemäß einem der vorangegangenen Ansprüche, wobei in einem aneinander befestigten Zustand des Profilelements (240) und des Fensterprofilelements (260) der Deckelabschnitt (247) des Profilelements fluchtend mit einem Blendenabschnitt (268) des Fensterprofilelements (260) angeordnet ist.

5. Fixierungsvorrichtung (130) gemäß einem der vorangegangenen Ansprüche, wobei das Fensterprofilelement (260) einen äußeren Anlageabschnitt (272) zur Anlage gegen ein äußeres Blech (290) einer das Fenster (110) umgebenden Wand des Türflügels (105) für das Schienenfahrzeug (100) und einen inneren Anlageabschnitt (274) zur Anlage gegen ein inneres Blech (295) der das Fenster (110) umgebenden Wand des Türflügels (105) für das Schienenfahrzeug (100) aufweist, wobei die Anlageabschnitte (272, 274) an voneinander abgewandten Seiten des Fensterprofilelements (260) angeordnet sind.

6. Fixierungsvorrichtung (130) gemäß Anspruch 5, wobei jeder der Anlageabschnitte (272, 274) als eine stufenförmige Ausnehmung mit einer Anlagefläche (276) und einem Stoßkantenabschnitt (278) ausgeformt ist, wobei eine Stufenhöhe des Stoßkantenabschnittes (278) einer Dicke des jeweiligen Blechs (290, 295) der das Fenster (110) umgebenden Wand des Türflügels (105) für das Schienenfahrzeug (100) entspricht.

7. Fixierungsvorrichtung (130) gemäß einem der vorangegangenen Ansprüche, wobei das Fensterprofilelement (260) benachbart zu dem Aufnahmeabschnitt (264) eine Mulde (266) zum formschlüssigen Halten des Verbindungsabschnitts (249) des Profilelements (240) aufweist.

8. Fixierungsvorrichtung (130) gemäß einem der vorangegangenen Ansprüche, wobei das Profilelement (240) in dem Vertiefungsabschnitt (241) eine Mehrzahl von Lamellen (243) zur Anlage an den Randbereich der Fensterscheibe (120) aufweist.

9. Fenster (110) für ein Schienenfahrzeug (100), wobei das Fenster (110) eine Fensterscheibe (120) und mindestens eine Fixierungsvorrichtung (130) gemäß einem der vorangegangenen Ansprüche aufweist.

10. Verfahren (300) zum Fixieren einer Fensterscheibe (120) eines Fensters (110) in einem Türflügel (105) für ein Schienenfahrzeug (100), wobei das Verfahren (300) unter Verwendung einer Fixierungsvorrichtung (130) gemäß einem der Ansprüche 1 bis 8 ausgeführt wird, wobei das Verfahren (300) folgende Schritte aufweist:
Anordnen (301) des Randbereichs der Fensterscheibe (120) in dem Vertiefungsabschnitt (241) des Profilelements (240), wobei der Randbereich durch den Vertiefungsabschnitt (241) umgriffen wird;
Anbringen (303) des einen Teils (282) der Befestigungseinrichtung (280) in dem Anbringungsabschnitt (245) des Profilelements (240) durch Formschluss;
Anordnen (305) des weiteren Teils (284, 286) der Befestigungseinrichtung (280) in dem Anordnungsabschnitt (262) des Fensterprofilelements (260);
Befestigen (307) des Profilelements (240) und des Fensterprofilelements (260) aneinander durch Formschluss und/oder Kraftschluss mittels der Befestigungseinrichtung (280); und
Verbinden (308) des Deckelabschnitts (247) des Profilelements (240) mit dem Fensterprofilelement (260) durch Formschluss, wobei der Verbindungsabschnitt (249) des Profilelements (240) in dem Aufnahmeabschnitt (264) des Fensterprofilelements (260) aufgenommen wird.

## Claims

1. A fixing device (130) for fixing a window pane (120) of a window (110) in a door leaf (105) for a rail vehicle (100), wherein the fixing device (130) comprises a profiled element (240), a window profiled element (260) and a fastening apparatus (280), wherein the fastening apparatus (280) is designed to fasten the profiled element (240) and the window profiled element (260) to each other by form-locking and/or frictional connection, wherein the profiled element (240) is formed of an elastic material, wherein the profiled element (240) comprises a recess portion (241) for reaching around an edge region of the window pane (120), an attachment portion (245) for attaching a part (282) of the fastening apparatus (280) to the profiled element (240) by form-locking connection, and a cover portion (247) for covering the fastening apparatus (280), **characterized in that** the profiled element (260) further comprises a connection portion (249) for connecting the cover portion (247) to the window profiled element (240) by form-locking connection, wherein the cover portion (247) is arranged between the attachment portion (245) and the connection portion (249), wherein the window profiled element (260) comprises an arrangement portion (280) for arranging a further part (264, 286) of the fastening apparatus (262) and a receiving portion (284) for receiving the connection portion (249) of the profiled element (240).

2. The fixing device (130) according to claim 1, wherein the profiled element (240) is formed in one piece and/or of rubber.

3. The fixing device (130) according to any one of the preceding claims, wherein the fastening apparatus (280) comprises at least one fixing plate (282), at least one threaded apparatus (284) and at least one fixing screw (286), wherein the at least one threaded apparatus (284) can be arranged on the arrangement portion (262) of the window profiled element (260), wherein the at least one fixing plate (282) can be attached in the attachment portion (245) of the profiled element (240) and can be fastened by means of the at least one threaded apparatus (284) and the at least one fixing screw (286) to the window profiled element (260).

4. The fixing device (130) according to any one of the preceding claims, wherein in a mutually fastened state of the profiled element (240) and the window profiled element (260) the cover portion (247) of the profiled element is arranged in alignment with a trim portion (268) of the window profiled element (260).

5. The fixing device (130) according to any one of the preceding claims, wherein the window profiled element (260) comprises an outer abutment portion (272) for abutment against an outer sheet metal (290) of a wall of the door leaf (105) surrounding the window (110) for the rail vehicle (100) and an inner abutment portion (105) for abutment against an inner sheet metal (295) of the wall of the door leaf (274) surrounding the window (110) for the rail vehicle (100), wherein the abutment portions (272, 274) are arranged on sides of the window profiled element (260) facing away from each other.

6. The fixing device (130) according to claim 5, wherein each of the abutment portions (272, 274) is formed as a step-shaped recess with an abutment surface (276) and a butt edge portion (278), wherein a step height of the butt edge portion (278) corresponds to a thickness of the respective sheet metal (290, 295) of the wall surrounding the window (110) of the door leaf (105) for the rail vehicle (100).

7. The fixing device (130) according to any one of the preceding claims, wherein the window profiled element (260) adjacent to the receiving portion (264) comprises a depression (266) for holding the connection portion (249) of the profiled element (240) in a form-locking manner.

8. The fixing device (130) according to any one of the preceding claims, wherein the profiled element (240) in the recess portion (241) comprises a plurality of slats (243) for abutment against the edge region of the window pane (120).

9. A window (110) for a rail vehicle (100), wherein the window (110) comprises a window pane (120) and at least one fixing device (130) according to any one of the preceding claims.

10. A method (300) for fixing a window pane (120) of a window (110) in a door leaf (105) for a rail vehicle (100), wherein the method (300) is carried out by using a fixing device (130) according to any one of claims 1 to 8, wherein the method (300) comprises the following steps:
arranging (301) the edge region of the window pane (120) in the recess portion (241) of the profiled element (240), wherein the edge portion is enclosed by the recess portion (241);
attaching (303) the one part (282) of the fastening apparatus (280) in the attachment portion (245) of the profiled element (240) by means of form-locking connection;
arranging (305) the further part (284, 286) of the fastening apparatus (280) in the arrangement portion (262) of the window profiled element (260);
fastening (307) the profiled element (240) and the window profiled element (260) to each other by means of form-locking and/or a frictional connection by means of the fastening apparatus (280); and
connecting (308) the cover portion (247) of the profiled element (240) to the window profiled element (260) by form-locking connection, wherein the connection portion (249) of the profiled element (240) is received in the receiving portion (264) of the window profiled element (260).

## Revendications

1. Dispositif de fixation (130) pour la fixation d'une vitre de fenêtre (120) d'une fenêtre (110) dans un battant de porte (105) pour un véhicule ferroviaire (100), dans lequel le dispositif de fixation (130) présente un élément profilé (240), un élément profilé de fenêtre (260) et un appareil d'attache (280), dans lequel l'appareil d'attache (280) est configuré afin de fixer l'élément profilé (240) et l'élément profilé de fenêtre (260) l'un à l'autre par complémentarité de formes et/ou à force, dans lequel l'élément profilé (240) est formé d'un matériau élastique, dans lequel l'élément profilé (240) présente une section de cavité (241) pour entourer une zone de bord de la vitre de fenêtre (120), une section de montage (245) pour le montage d'une partie (282) de l'appareil d'attache (280) au niveau de l'élément profilé (240) par complémentarité de formes, et une section de couvercle (247) pour le recouvrement de l'appareil d'attache (280), **caractérisé en ce que** l'élément profilé (240) présente de plus une section de liaison (249) pour la liaison de la section de couvercle (247) avec l'élément profilé de fenêtre (260) par complémentarité de formes, dans lequel la section de couvercle (247) est agencée entre la section de montage (245) et la section de liaison (249), dans lequel l'élément profilé de fenêtre (260) présente une section d'agencement (262) pour l'agencement d'une autre partie (284, 286) de l'appareil d'attache (280) et une section de réception (264) pour la réception de la section de liaison (249) de l'élément profilé (240).

2. Dispositif de fixation (130) selon la revendication 1, dans lequel l'élément profilé (240) est formé d'un seul tenant et/ou en caoutchouc.

3. Dispositif de fixation (130) selon l'une quelconque des revendications précédentes, dans lequel l'appareil d'attache (280) présente au moins une plaque de fixation (282), au moins un appareil de filetage (284) et au moins une vis de fixation (286), dans lequel le au moins un appareil de filetage (284) peut être agencé au niveau de la section d'agencement (262) de l'élément profilé de fenêtre (260), dans lequel la au moins une plaque de fixation (282) peut être montée dans la section de montage (245) de l'élément profilé (240) et peut être fixée à l'élément profilé de fenêtre (260) au moyen de l'au moins un appareil de filetage (284) et de la au moins une vis de fixation (286).

4. Dispositif de fixation (130) selon l'une quelconque des revendications précédentes, dans lequel dans un état fixé l'un à l'autre de l'élément profilé (240) et de l'élément profilé de fenêtre (260), la section de couvercle (247) de l'élément profilé est agencée en alignement avec une section de panneau (268) de l'élément profilé de fenêtre (260).

5. Dispositif de fixation (130) selon l'une quelconque des revendications précédentes, dans lequel l'élément profilé de fenêtre (260) présente une section d'appui extérieure (272) pour l'appui contre une tôle extérieure (290) d'une paroi du battant de porte (105) entourant la fenêtre (110) pour le véhicule ferroviaire (100) et une section d'appui intérieure (274) pour l'appui contre une tôle intérieure (295) de la paroi du battant de porte (105) entourant la fenêtre (110) pour le véhicule ferroviaire (100), dans lequel les sections d'appui (272, 274) sont agencées au niveau de côtés de l'élément profilé de fenêtre (260) éloignés les uns des autres.

6. Dispositif de fixation (130) selon la revendication 5, dans lequel chacune des sections d'appui (272, 274) est formée comme un évidement étagé avec une surface d'appui (276) et une section de bord de butée (278), dans lequel une hauteur étagée de la section de bord de butée (278) correspond à une épaisseur de la tôle respective (290, 295) de la paroi du battant de porte (105) entourant la fenêtre (110) pour le véhicule ferroviaire (100).

7. Dispositif de fixation (130) selon l'une quelconque des revendications précédentes, dans lequel l'élément profilé de fenêtre (260) présente de manière contigüe à la section de réception (264) une cavité (266) pour le maintien de la section de liaison (249) de l'élément profilé (240) par complémentarité de formes.

8. Dispositif de fixation (130) selon l'une quelconque des revendications précédentes, dans lequel l'élément profilé (240) présente dans la section de cavité (241) une pluralité de lamelles (243) pour l'appui contre la zone de bord de la vitre de fenêtre (120).

9. Fenêtre (110) pour un véhicule ferroviaire (100), dans laquelle la fenêtre (110) présente une vitre de fenêtre (120) et au moins un dispositif de fixation (130) selon l'une quelconque des revendications précédentes.

10. Procédé (300) de fixation d'une vitre de fenêtre (120) d'une fenêtre (110) dans un battant de porte (105) pour un véhicule ferroviaire (100), dans lequel le procédé (300) est réalisé en utilisant un dispositif de fixation (130) selon l'une quelconque des revendications 1 à 8, dans lequel le procédé (300) présente les étapes suivantes :
l'agencement (301) de la zone de bord de la vitre de fenêtre (120) dans la section de cavité (241) de l'élément profilé (240), dans lequel la zone de bord est entourée par la section de cavité (241) ;
le montage (303) de l'une partie (282) de l'appareil d'attache (280) dans la section de montage (245) de l'élément profilé (240) par complémentarité de formes ;
l'agencement (305) de l'autre partie (284, 286) de l'appareil d'attache (280) dans la section d'agencement (262) de l'élément profilé de fenêtre (260) ;
l'attache (307) de l'élément profilé (240) et de l'élément profilé de fenêtre (260) l'un à l'autre par complémentarité de formes et/ou à force au moyen de l'appareil d'attache (280) ; et
la liaison (308) de la section de couvercle (247) de l'élément profilé (240) avec l'élément profilé de fenêtre (260) par complémentarité de formes, dans lequel la section de liaison (249) de l'élément profilé (240) est reçue dans la section de réception (264) de l'élément profilé de fenêtre (260).
